# EUROPEAN PATENT APPLICATION

(11) **EP 4 667 306 A1**
(43) Date of publication of application: **24.12.2025**
(21) Application number: 24182827.6
(22) Date of filing: 18.06.2024
(51) Int. Cl.: B60T 8/172, B60T 17/22, B60W 40/13, B60W 50/00

(54) **COMPUTER SYSTEM AND METHOD FOR CONTROLLING OPERATION OF A VEHICLE**

(71) Applicant: Volvo Construction Equipment AB, 631 85 Eskilstuna (SE)
(72) Inventor: LJUNGARS, Erik, 633 51 ESKILSTUNA (SE); HAEGERSTAM, Joakim, 570 03 VRIGSTAD (SE)
(74) Representative: Kransell & Wennborg KB

(57) **Abstract**

A computer system configured to control operation of a vehicle, configured to:
- save a data set associated with a path segment during travel of a data collecting vehicle along the path segment, the path segment comprising a plurality of target locations, wherein the data set comprises subsets of data points relating to a location and heading of the vehicle at each target location,
- determine an operating profile for controlling operation of a target vehicle during subsequent travel along the path segment, the target vehicle comprising a service brake cooled by a brake cooling fluid, the operating profile being determined such that a temperature of the brake cooling fluid meets a temperature criterion,
- during subsequent travel, activate the operating profile in response to detecting that a set of activation criteria is fulfilled, comprising criteria relating to a weight, a location, and a heading of the target vehicle.

## Description

### TECHNICAL FIELD

The disclosure relates generally to operation of vehicles using brake cooling. In particular aspects, the disclosure relates to a computer system and a method for controlling operation of a vehicle in driving conditions where brake cooling is requested. The disclosure can be applied to heavy-duty vehicles and working machines, such as trucks, buses, and construction equipment, among other vehicle types. Although the disclosure may be described with respect to a particular vehicle or working machine, the disclosure is not restricted to any particular vehicle or working machine.

### BACKGROUND

Heavy-duty vehicles such as articulated haulers often work in long slopes carrying load downhill. During the descents, the vehicle speed is controlled by a combination of a service brake, i.e., wheel brakes, and an engine brake of the vehicle.

The wheel brake capacity is limited by the capacity of the brake cooling system, which means when the brake cooling media exceeds a certain temperature, there is a risk of overheating and shortening of component lifetime. For this reason, it is necessary to keep the speed low enough during descents to avoid excessive wheel braking.

### SUMMARY

According to a first aspect of the disclosure, a computer system configured to control operation of a vehicle is provided. The computer system comprises processing circuitry configured to:
- save a data set associated with a path segment during travel of a data collecting vehicle along the path segment in a first direction of travel, the path segment comprising a plurality of target locations, wherein the data set comprises several subsets of data points, each subset of data points relating to a location and a heading of the vehicle at a respective one of the target locations,
- determine an operating profile to be used for controlling operation of a target vehicle during subsequent travel of the target vehicle along the path segment in the first direction of travel, the target vehicle comprising a service brake cooled by a brake cooling fluid, the operating profile being determined such that a temperature of the brake cooling fluid will meet a predefined temperature criterion when the operating profile is active during travel along the path segment,
- during subsequent travel of the target vehicle, activate the operating profile in response to detecting that a predetermined set of activation criteria is fulfilled, wherein the set of activation criteria comprises a first criterion relating to a weight of the target vehicle, a second criterion relating to a location of the target vehicle, and a third criterion relating to a heading of the target vehicle.

The first aspect of the disclosure may seek to provide an in at least some aspect improved computer system for controlling operation of a vehicle, such as a heavy-duty working machine, before and during downhill travel. A technical benefit may include the possibility to, before reaching a steep and/or long downhill section, during which there is a risk that the service brake will overheat, activate an operating profile tailored to keep the temperature of the brake cooling fluid at an acceptable level.

The predefined temperature criterion may be set to maintain the temperature of the brake cooling fluid below a predefined temperature threshold. The operating profile may be set based on a monitored braking power and temperature of a brake cooling fluid of the data collecting vehicle. The path segment, may, when travelled in the first direction of travel, comprise at least one downhill section.

The target vehicle may be the same vehicle as the data collecting vehicle. However, it may also be another vehicle, such as a vehicle of the same type as the data collecting vehicle.

Optionally in some examples, including in at least one preferred example, the first criterion is considered fulfilled when the weight of the target vehicle is above a threshold weight, the second criterion is considered fulfilled when the target vehicle is within a predetermined range from a starting target location of the path segment, and the third criterion is considered fulfilled when the heading of the target vehicle is within a predetermined angular range from the first direction of travel. A technical benefit of setting the first criterion in this way may include the possibility to avoid activating the operating profile when the vehicle is not loaded with goods, hence avoiding unnecessary limitations of the vehicle speed in those cases. A technical benefit of setting the second and third criteria in this way may include the ability to activate the operating profile only at the relevant time and location, and when the target vehicle is travelling in the same direction as the data collecting vehicle along the path segment and is hence likely to traverse the same downhill section as the data collecting vehicle.

Optionally in some examples, including in at least one preferred example, the set of activation criteria is considered fulfilled at least when the target vehicle is fully loaded with goods and enters the path segment via a first target location of the path segment in the first direction of travel. The risk of overheating the brake cooling fluid in the target vehicle may thereby be significantly reduced.

Optionally in some examples, including in at least one preferred example, saving the data set associated with the path segment comprises:
- temporarily storing subsets of data points during travel of the data collecting vehicle along a travelling path,
- in response to detecting that a predetermined first condition is fulfilled, initiate creation of the data set associated with the path segment, at least a portion of the temporarily stored subsets of data points being saved within the data set.

A technical benefit may include the possibility to store data collected before the first condition is fulfilled, such as during travel along an uphill or flat section before a downhill section is entered, as a part of the data set associated with the path segment. In this way, the operating profile may be set so that the target vehicle takes preventive action already before entering the downhill section, such as by preventive speed reduction. Furthermore, the amount of stored data may be reduced, since the temporarily stored data is only stored in a long-term memory once it has been found that the data are relevant. Non-relevant temporarily stored data may be regularly discarded, such as after a certain time has elapsed from the storing occasion, or similar.

Optionally in some examples, including in at least one preferred example, the first condition is only considered fulfilled when a braking power of the data collecting vehicle is above a first threshold braking power, and/or when a temperature of a brake cooling fluid of the data collecting vehicle is above a threshold temperature. Hence, it may be ensured that the created data set is associated with a path segment comprising at least one downhill section in which there is a risk of overheating the brake cooling fluid. The braking power and/or the brake cooling fluid temperature may be continuously monitored during travel of the data collecting vehicle, or at least monitored while creation of the data set associated with the path segment is ongoing. Preferably, the first condition is only considered fulfilled when the braking power of the data collecting vehicle is above the first threshold braking power and when the temperature of the brake cooling fluid of the data collecting vehicle is above the threshold temperature.

Optionally in some examples, including in at least one preferred example, the first condition may further be considered fulfilled only when a speed controller of the data collecting vehicle is active, such as a cruise control or a downhill cruise control function.

Optionally in some examples, including in at least one preferred example, saving the data set associated with the path segment further comprises, in response to detecting that a predetermined second condition is fulfilled, adding a subset of data points to the saved path segment, the added subset of data points being associated with a current location and heading of the data collecting vehicle. A technical benefit may include that the path segment may be made as long or as short as needed.

Optionally in some examples, including in at least one preferred example, the second condition is only considered fulfilled when a predetermined time and/or distance has/have elapsed since saving a previous subset of data points, and when a braking power of the data collecting vehicle is above a second threshold braking power. A technical benefit may include that the path segment can be created as long as the data collecting vehicle is travelling downhill. The second threshold braking power may be smaller than the first threshold braking power. If the braking power falls below the second threshold, the subset of datapoints is not stored as a part of the data set associated with the path segment.

Optionally in some examples, including in at least one preferred example, the processing circuitry is configured to determine the operating profile such that the temperature of the brake cooling fluid within the target vehicle is reduced, such as to a target temperature, during travel along an initial portion of the path segment in the first direction of travel. The initial portion of the path segment may, e.g., be an upfill or straight portion. In this way, use of the service brake in the target vehicle may be reduced during travel along the path segment.

Optionally in some examples, including in at least one preferred example, the processing circuitry is configured to determine the operating profile such that engine braking is prioritized over braking with the service brake. A technical benefit may include a reduced use of the service brake, hence a reduced brake cooling fluid temperature.

According to a second aspect of the disclosure, a vehicle comprising the computer system according to the first aspect is provided. Hence, the vehicle may be configured to both collect data and save the data set associated with the path segment, determine the operating profile, and to subsequently activate the operating profile during travel along the path segment. In other examples, a vehicle may be provided which is communicatively connected to the computer system according to the first aspect. It may be configured as a data collecting vehicle and/or as a target vehicle. The vehicle may be a heavy-duty working machine, such as an articulated hauler or similar.

According to a third aspect of the disclosure, a computer-implemented method for controlling operation of a vehicle is provided. The method comprises: comprising:
- saving, by processing circuitry of a computer system, a data set associated with a path segment during travel of a data collecting vehicle along the path segment in a first direction of travel, the path segment comprising a plurality of target locations, wherein the data set comprises several subsets of data points, each subset of data points relating to a location and a heading of the vehicle at a respective one of the target locations,
- determining, by the processing circuitry, an operating profile to be used for controlling operation of a target vehicle during subsequent travel of the target vehicle along the path segment in the first direction of travel, the target vehicle comprising a service brake cooled by a brake cooling fluid, the operating profile being determined such that a temperature of the brake cooling fluid will meet a predefined temperature criterion when the operating profile is active during travel along the path segment,
- during subsequent travel of the target vehicle, activating, by the processing circuitry, the operating profile in response to detecting that a predetermined set of activation criteria is fulfilled, wherein the set of activation criteria comprises a first criterion relating to a weight of the target vehicle, a second criterion relating to a location of the target vehicle, and a third criterion relating to a heading of the target vehicle.

The third aspect of the disclosure may seek to provide an in at least some aspect improved method for controlling operation of a vehicle before and during downhill travel. A technical benefit may include the possibility to, before reaching a steep and/or long downhill section, during which there is a risk that the service brake will overheat, activate an operating profile tailored to keep the temperature of the brake cooling fluid at an acceptable level. Further advantages and advantageous embodiments of the third aspect appear from the above description of the first aspect.

Optionally in some examples, including in at least one preferred example, he first criterion is considered fulfilled when the weight of the target vehicle is above a threshold weight, the second criterion is considered fulfilled when the target vehicle is within a predetermined range from a starting target location of the path segment, and the third criterion is considered fulfilled when the heading of the target vehicle is within a predetermined angular range from the first direction of travel.

Optionally in some examples, including in at least one preferred example, the set of activation criteria is considered fulfilled at least when the target vehicle is fully loaded with goods and enters the path segment via a first target location of the path segment in the first direction of travel.

Optionally in some examples, including in at least one preferred example, saving the data set associated with the path segment comprises:
- temporarily storing subsets of data points during travel of the data collecting vehicle along a travelling path,
- in response to detecting that a predetermined first condition is fulfilled, initiate creation of the data set associated with the path segment, at least a portion of the temporarily stored subsets of data points being saved within the data set.

Optionally in some examples, including in at least one preferred example, the first condition is only considered fulfilled when a braking power of the data collecting vehicle is above a first threshold braking power, and/or when a temperature of a brake cooling fluid of the data collecting vehicle is above a threshold temperature.

Optionally in some examples, including in at least one preferred example, saving the data set associated with the path segment further comprises:
- in response to detecting that a predetermined second condition is fulfilled, adding a subset of data points to the saved path segment, the added subset of data points being associated with a current location and heading of the data collecting vehicle.

Optionally in some examples, including in at least one preferred example, the second condition is only considered fulfilled when a predetermined time and/or distance has/have elapsed since saving a previous subset of data points, and when a braking power of the data collecting vehicle is above a second threshold braking power.

Optionally in some examples, including in at least one preferred example, the determination of the operating profile is performed such that the temperature of the brake cooling fluid within the target vehicle is reduced, such as to a target temperature, during travel along an initial portion of the path segment in the first direction of travel.

Optionally in some examples, including in at least one preferred example, the determination of the operating profile is performed such that engine braking is prioritized over braking with the service brake.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings. The drawings are schematic and not drawn to scale.
**FIG. 1** is an exemplary vehicle according to an example.
**FIG. 2** is a flow chart illustrating a method according to an example.
**FIG. 3** illustrates a data collecting vehicle travelling along a travelling path.
**FIG. 4** is a flow chart illustrating a method according to an example.
**FIG. 5** illustrates a data collecting vehicle and a target vehicle.
**FIG. 6** illustrates first and second vehicles at a working site.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

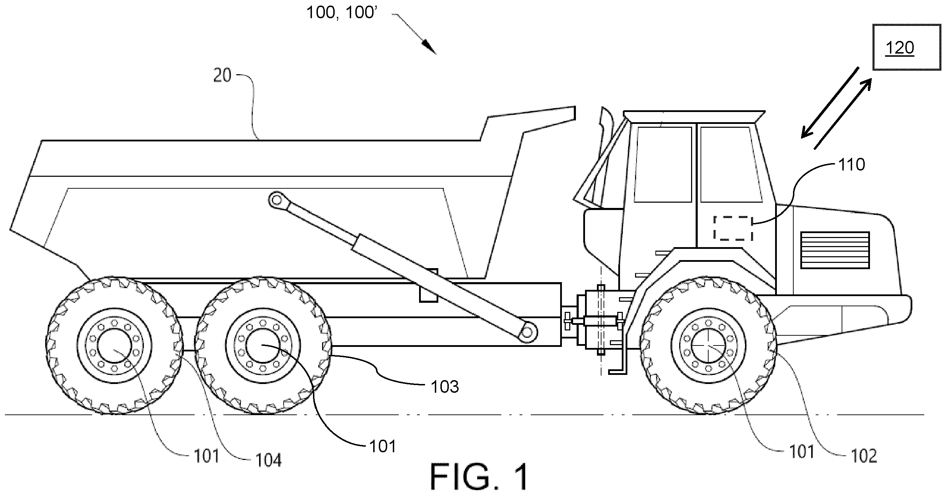

Heavy-duty vehicles, such as working machines, are often used to carry goods or material in working sites, such as in quarries, construction sites, mines, etc. **FIG. 1** shows an example of such a vehicle 100 in the form of an articulated hauler equipped with a tray 20 for carrying load. The haulers often work in long slopes carrying load downhill. During the descents, the speed of the vehicle 100 is controlled by a combination of a service brake 101 comprising wheel brakes acting on wheels 102, 103, 104 of the vehicle 100, and an engine brake (not shown).

The wheel brake capacity is limited by the capacity of a brake cooling system (not shown) of the vehicle 100, comprising brake cooling fluid. When the brake cooling fluid exceeds a certain temperature, there is a risk of overheating and shortening of a service life of the service brake 101. For this reason, it is necessary to keep the speed low enough during descents to avoid excessive wheel braking.

In a working site, there are often more or less temporary travelling paths available that the vehicle(s) active on the site may follow when transporting goods or material. The working site may be under development, meaning that the travelling paths and/or a topography of the working site may change relatively often. Accurate and up-to-date map data of the working site may therefore not be available to predict when a vehicle 100 is approaching a descent during which there is a risk that the service brake 101 becomes overheated.

The present disclosure attempts to provide means for preventing overheating of the service brake 101 of a vehicle 100 operated in a working site as described above. For this purpose, the vehicle 100 comprises an electronic control unit 110 configured to control operation of the vehicle 100.

The control unit 110 may in some embodiments be configured to perform a method as described herein on-board the vehicle 100. However, in other embodiments, the on-board control unit 110 may be configured to communicate wirelessly with one or more other devices 120, such as other electronic control units, computer systems, and/or servers. For example, the on-board control unit may be configured to communicate with on-board control units of other vehicles at the working site, and/or with a central server. The on-board control unit 110 of the vehicle 100 may be configured to send and/or receive instructions and/or data to/from the other device(s) 120. For example, the vehicle 100 may be configured to collect and send data to a processing device located off-board the vehicle 100, and to receive instructions from the off-board processing device.

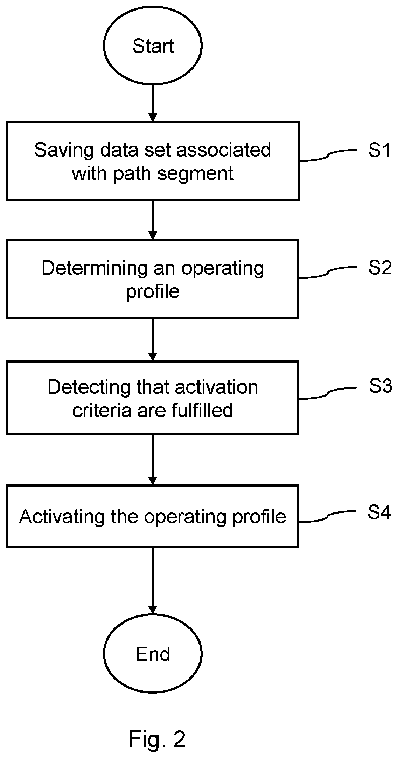

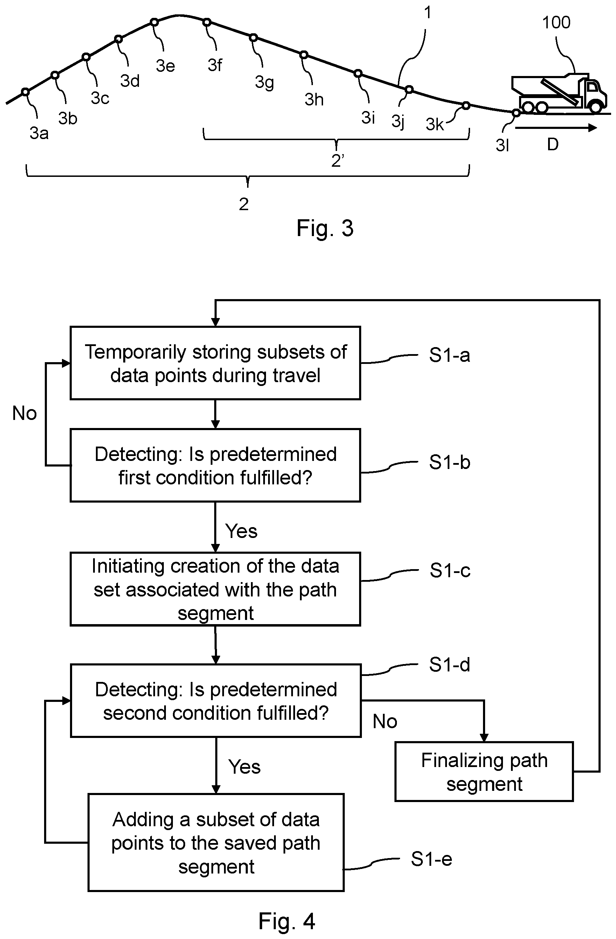

**FIG. 2** is a flow chart illustrating a computer-implemented method for controlling operation of the vehicle 100 according to an example. Reference is also made to **FIG. 3**, illustrating an exemplary vehicle 100 travelling along a travelling path 1 comprising an uphill portion followed by a downhill portion. The method may be performed by the on-board control unit 110 or by an off-board processing circuitry being communicatively connected to the on-board control unit 110. It comprises the following actions S1-S4:

**Action S1:** Saving a data set associated with a path segment 2 during travel of a data collecting vehicle 100 along the path segment 2 in a first direction of travel D. The path segment, may, when travelled in the first direction of travel D, comprise at least one downhill portion. The path segment 2 comprises a plurality of target locations 3a-3k, and the data set comprises several subsets of data points. Each subset of data points relates to a location and a heading of the vehicle 100 at a respective one of the target locations 3a-3k. Each subset of data points may define geographic coordinates of one of the target locations 3a-3k. The location and heading may be determined by using a navigation device of the vehicle, e.g., a satellite navigation device such as a global positioning system (GPS) receiver, possibly in combination with vehicle sensors such as accelerometers, gyroscopic sensors, and similar.

**Action S2**: Determining an operating profile to be used for controlling operation of a target vehicle 100' during subsequent travel of the target vehicle 100' along the path segment 2 in the first direction of travel D. The target vehicle 100' comprises a service brake 101 cooled by a brake cooling fluid. The operating profile, which may be set based on monitored braking power and temperature of a brake cooling fluid of the data collecting vehicle 100, is determined such that a temperature of the brake cooling fluid of the target vehicle 100' will meet a predefined temperature criterion when the operating profile is active during travel along the path segment 2 in the first direction of travel D. The operating profile may define how the target vehicle 100' is to be operated along the entire path segment 2, including at each target location 3a-3k.

The predefined temperature criterion may be set to maintain the temperature of the brake cooling fluid below a predefined temperature threshold. The data collecting vehicle 100 and the target vehicle 100' may be the same vehicle, as illustrated in FIG. 1, or different vehicles, such as vehicles of the same type. Information relating to a configuration of the service brake, the type of cooling fluid, etc., may be taken into account to set the predefined temperature criterion.

**Action S3**: Detecting that a predetermined set of activation criteria is fulfilled for activating the operating profile in the target vehicle 100'.

**Action S4**: During subsequent travel of the target vehicle 100', activating the operating profile determined in action S2 in response to the detecting of that the predetermined set of activation criteria is fulfilled in the action S3. The set of activation criteria comprises a first criterion relating to a weight of the target vehicle 100', a second criterion relating to a location of the target vehicle 100', and a third criterion relating to a heading of the target vehicle 100', i.e., a direction of travel of the target vehicle 100'. Upon activation of the operating profile, the target vehicle 100' will be operated such that the predefined temperature criterion is met while driving along the path segment 2. If the processing circuitry performing the method is remotely located from the target vehicle 100, it may provide the operating profile to the on-board control unit 110 of the target vehicle 100 and remotely trigger activation thereof.

According to the proposed method, an operating profile may hence be created when a data collecting vehicle 100 travels along a travelling path 1 and it is detected that, over a particular path segment 2, there is a risk of overheating the service brake 101. The operating profile is determined such that it reduces the risk of overheating the service brake 101 if the operating profile is used during subsequent travel along the same path segment 2 in the same direction. When a target vehicle 100', which may be the same vehicle as the data collecting vehicle 100 or a similar vehicle, enters the same path segment 2 under the same or similar conditions relating to, e.g., vehicle weight and travel direction as when the risk of overheating was detected, the operating profile may be activated in the target vehicle 100' to prevent overheating.

Saving of the data set associated with the path segment 2 in connection with the action S1 will now be described in greater detail with reference to **FIG. 4**. In some examples, saving the data set associated with the path segment 2 may comprise the following sub-actions S1a-S1c:

**Action S1-a:** Temporarily storing subsets of data points during travel of the data collecting vehicle 100 along the travelling path 1. Each subset of data points may be associated with a location and heading of the data collecting vehicle 100 at the time of collecting the subset. The temporary storing of subsets of data points may be carried out continuously during travel of the data collecting vehicle 100, at a certain sampling frequency, such as each 10s, each 20s, each 30s, or similar. The subsets of data points may be stored in a temporary buffer holding a predetermined number of subsets, such as 3-25, or 3-10, subsets of data points, depending on, e.g., data storage capabilities.

**Action S1-b**: Detecting that a predetermined first condition is fulfilled. The first condition may be considered fulfilled only when a braking power of the data collecting vehicle 100 is above a first threshold braking power, and/or when a temperature of a brake cooling fluid of the data collecting vehicle 100 is above a threshold temperature, thus indicating that there is a risk of overheating of the service brake 101 of the data collecting vehicle 100. Hence, the first condition is related to a risk of overheating of the service brake 101 of the data collecting vehicle 100.

**Action S1-c**: In response to the detecting of that the predetermined first condition is fulfilled in the action S 1-b, initiating creation of the data set associated with the path segment 2, at least a portion of the temporarily stored subsets of data points being saved within the data set. Whenever the first condition is not considered fulfilled, the oldest temporarily stored subset of data points may be discarded.

**Action S1-d**: Detecting that a predetermined second condition is fulfilled. The second condition may, e.g., be considered fulfilled only when a predetermined time and/or distance has/have elapsed since saving a previous subset of data points, and when a braking power of the data collecting vehicle 100 is above a second threshold braking power. The second threshold braking power may be smaller than the first threshold braking power.

**Action S1-e**: In response to the detecting of that the predetermined second condition is fulfilled in the action S1-d, adding a subset of data points to the saved path segment 2, the added subset of data points being associated with a current location and heading of the data collecting vehicle 100. Hence, as long as the braking power is above the second threshold braking power, new subsets of data points may be added to the data set associated with the path segment 2 at regular intervals.

When the second condition is no longer fulfilled, such as when the braking power of the data collecting vehicle 100 falls below the second threshold braking power, the newly collected subset of data points is not stored as a part of the data set associated with the path segment 2. As a result of this, the path segment 2 may be finalized, i.e., the data set associated with the path segment 2 may be stored for later use during travel of the target vehicle 100'. The temporary storing of subsets of data points in action S1-a may thereafter be continued as the data collecting vehicle 100 continues to travel along the travelling path 1.

Typically, a path segment 2 may comprise from 3-5 target locations up to 50 target locations, or up to 40 target locations, or up to 30 target locations, or up to 20 target locations, or similar. Alternatively, when the second condition is no longer fulfilled, the creation of the data set may be interrupted and the temporary storing of subsets of data points in action S1-a resumed. This may, e.g., be the case if it is determined that the number of target locations is too few (i.e., the path segment is too short), and/or if a cruise control of the data collecting vehicle 100 is deactivated, and/or if the temperature of the brake cooling fluid of the data collecting vehicle 100 is not above the threshold temperature.

Two different example scenarios will now be described with reference to **FIG. 3**.

In a first example scenario, the first condition relating to braking power is fulfilled at the target location 3f, when the data collecting vehicle 100 has entered the downhill portion of the travelling path 1. At this point, creation of the data set is initiated and the temporarily stored subsets of data points associated with the five previous target locations 3a-3e are stored in the data set together with the data points associated with the location 3f. The second condition is fulfilled when the data collecting vehicle 100 passes all the target locations 3g-3k, and hence the subsets of data points associated with those target locations are added to the saved path segment 2, i.e., to the data set associated with the path segment 2. When the data collecting vehicle 100 reaches the target location 31, the second condition is no longer fulfilled, e.g., due to that a maximum number of subsets of data points have been stored, or due to that the braking power is below the second threshold braking power. The created path segment 2 hence extends from the target location 3a to the target location 3k, and the operating profile is determined accordingly. The operating profile may advantageously be set such that a vehicle speed of the target vehicle 100' at a beginning of the downhill portion is reduced in comparison with "normal" operation.

In a second example scenario, the first condition relating to the temperature of the brake cooling fluid is fulfilled at a bottom of the downhill portion, when the vehicle 100 reaches the target location 3k, even though the braking power has not exceeded the first threshold braking power at any one of the previous target locations 3f-3j along the downhill portion of the travelling path 1. In this case, saving of a data set associated with a path segment 2' is triggered at the target location 3k. The data set associated with the path segment 2' includes the five previous subsets of data points associated with the target locations 3f-3j. At the location 31, the braking power is below the second threshold braking power. The created path segment 2' hence extends from the target location 3a to the target location 3k, and the operating profile is determined accordingly. Compared to the first example scenario, the operating profile for the path segment 2' may define reactive rather than proactive operation of the target vehicle 100', such as prioritizing of engine braking over wheel braking over the path segment 2'.

In other example scenarios, the first condition may be set to be fulfilled only when both the braking power and the temperature exceed the respective thresholds at some point along the downhill portion of the travelling path 1. The operating profile determined for the created path segment may define both proactive and reactive operation of the target vehicle 100'.

Activation of the operating profile for controlling the target vehicle 100' in connection with the action S4 will now be described in greater detail with reference to **FIG. 4**. The first criterion for activation of the operating profile, relating to the weight of the target vehicle 100', may be considered fulfilled when the weight of the target vehicle 100' is above a threshold weight, such as when the target vehicle 100' carries a load. In some examples, the first condition may be considered fulfilled when the weight of the target vehicle 100' is within a predefined weight range from a weight of the data collecting vehicle 100 at the time of creation of the path segment 2, such as ±10-20% of the weight of the data collecting vehicle 100. A weight sensing system, such as included in a suspension system (not shown) of the target vehicle 100', may be used to determine the weight of the vehicle 100', or the weight may be communicated from, e.g., a weighing station. The second criterion, relating to the location of the target vehicle 100', may be considered fulfilled when the target vehicle 100' is within a predetermined range, i.e., distance, from a starting target location 3a of the path segment 2, such as within a radius of 100 m from the starting target location 3a. The third criterion, relating to the heading of the target vehicle 100', may be considered fulfilled when the heading of the target vehicle 100' is within a predetermined angular range ±α, such as ±45°, from the first direction of travel D. This is illustrated in FIG. 4, wherein, on top, a data collecting vehicle 100 is illustrated at the starting target location 3a, travelling in the first direction of travel D. Illustrated below the data collecting vehicle 100 is a target vehicle 100' (the same vehicle or a different vehicle) approaching the starting target location 3a at a later point in time, when the starting target location 3a forms part of the created path segment 2. Activation of the operating profile in the target vehicle 100' will depend on whether the target vehicle 100' reaches a location within the predetermined range from the starting location 3a when travelling in a direction being within the predetermined angular range ±α. The set of activation criteria may preferably be considered fulfilled at least when the target vehicle 100' is fully loaded with goods and enters the path segment 2 in the first direction of travel D via the starting target location 3a.

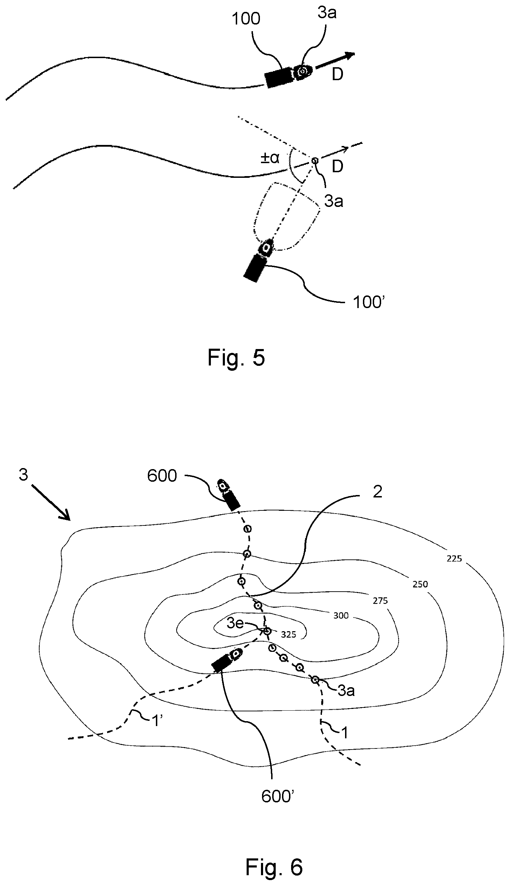

**FIG. 6** illustrates a situation where the activation criteria for activating the operating profile in a second vehicle 600' are not fulfilled during travel at a working site 3. The second vehicle 600' may correspond to the vehicle 100 previously described with reference to FIG. 1. In the illustrated situation, the second vehicle 600' approaches a path segment 2 created by a first vehicle 600 or created by the second vehicle 600' itself during previous travel. However, the second vehicle 600' follows another travelling path 1' than the travelling path 1 of the first vehicle 600 and hence enters the path segment 2 close to the target location 3e, and not via the starting target location 3a. Instead of activating the operating profile in the second vehicle 600', storing of a new data set associated with a new path segment may be initiated during travel of the second vehicle 600' if the first condition for initiating creation of a data set associated with a new path segment is fulfilled.

The operating profile may in the action S2 be determined such that the temperature of the brake cooling fluid within the target vehicle 100' is reduced, such as to a target temperature, during travel along an initial portion of the path segment 2 in the first direction of travel D. With reference to FIG. 3, the initial portion of the path segment 2 may in the first example scenario be the portion comprising the target locations 3a-3e, i.e., an uphill portion of the path segment 2. During this uphill portion of the path segment 2, the brake cooling system may be operated at high power to reduce the temperature and create a margin for the upcoming descent. The vehicle speed may at the same time be reduced during the uphill portion, creating a margin for speed increase during the upcoming descent. The operating profile may further be determined such that engine braking is prioritized over braking with the service brake 101 during travel in the downhill portion of the path segment 2. The operating profile may further be determined to increase engine braking performance, such as by operating an engine of the target vehicle 100' at a high engine speed during travel in the downhill portion of the path segment 2.

The data set associated with the path segment 2 may be stored during a limited time period, such as for a time period of a few weeks or similar. The duration of the time period may, e.g., depend on how quickly the topography of the working site is changing. Furthermore, vehicles may be moved to a different working site at which the previously stored data sets are no longer relevant. In some examples, a data set associated with a path segment may be discarded if the activation criteria have not been fulfilled for a certain time period.

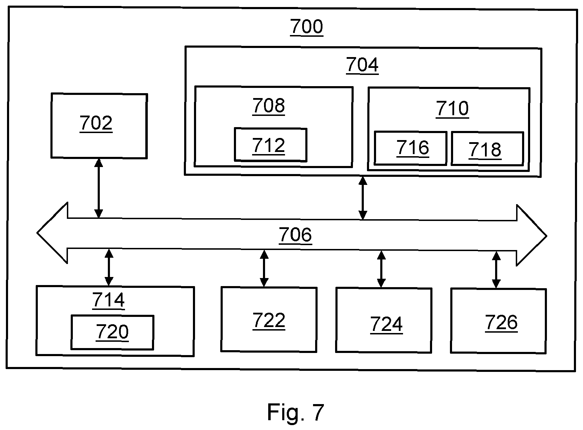

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704**, and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710**, which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714**, which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, a list of numbered examples of aspects of the disclosure is provided.

Example 1: A computer system (700) configured to control operation of a vehicle (100), the computer system comprising processing circuitry (702) configured to:
- save a data set associated with a path segment (2) during travel of a data collecting vehicle (100) along the path segment in a first direction of travel (D), the path segment comprising a plurality of target locations (3a,..., 3k), wherein the data set comprises several subsets of data points, each subset of data points relating to a location and a heading of the data collecting vehicle (100) at a respective one of the target locations (3a,..., 3k),
- determine an operating profile to be used for controlling operation of a target vehicle (100') during subsequent travel of the target vehicle (100') along the path segment (2) in the first direction of travel (D), the target vehicle (100') comprising a service brake (101) cooled by a brake cooling fluid, the operating profile being determined such that a temperature of the brake cooling fluid will meet a predefined temperature criterion when the operating profile is active during travel along the path segment (2),
- during subsequent travel of the target vehicle, activate the operating profile in response to detecting that a predetermined set of activation criteria is fulfilled, wherein the set of activation criteria comprises a first criterion relating to a weight of the target vehicle (100'), a second criterion relating to a location of the target vehicle (100'), and a third criterion relating to a heading of the target vehicle (100').

Example 2. The computer system of example 1, wherein the first criterion is considered fulfilled when the weight of the target vehicle (100') is above a threshold weight, the second criterion is considered fulfilled when the target vehicle (100') is within a predetermined range from a starting target location (3a) of the path segment (2), and the third criterion is considered fulfilled when the heading of the target vehicle (100') is within a predetermined angular range (±α) from the first direction of travel (D).

Example 3. The computer system of example 1 or 2, wherein the set of activation criteria is considered fulfilled at least when the target vehicle (100') is fully loaded with goods and enters the path segment (2) via a first target location (3a) of the path segment (2) in the first direction of travel (D).

Example 4. The computer system of any one of the preceding examples, wherein saving the data set associated with the path segment (2) comprises:
- temporarily storing subsets of data points during travel of the data collecting vehicle (100) along a travelling path (1),
- in response to detecting that a predetermined first condition is fulfilled, initiate creation of the data set associated with the path segment (2), at least a portion of the temporarily stored subsets of data points being saved within the data set.

Example 5. The computer system of example 4, wherein the first condition is only considered fulfilled when a braking power of the data collecting vehicle (100) is above a first threshold braking power, and/or when a temperature of a brake cooling fluid of the data collecting vehicle (100) is above a threshold temperature.

Example 6. The computer system of example 4 or 5, wherein saving the data set associated with the path segment (2) further comprises:
- in response to detecting that a predetermined second condition is fulfilled, adding a subset of data points to the saved path segment, the added subset of data points being associated with a current location and heading of the data collecting vehicle (100).

Example 7. The computer system of example 6, wherein the second condition is only considered fulfilled when a predetermined time and/or distance has/have elapsed since saving a previous subset of data points, and when a braking power of the data collecting vehicle (100) is above a second threshold braking power.

Example 8. The computer system of any one of the preceding examples, wherein the processing circuitry is configured to determine the operating profile such that the temperature of the brake cooling fluid within the target vehicle (100') is reduced, such as to a target temperature, during travel along an initial portion of the path segment (2) in the first direction of travel (D).

Example 9. The computer system of any one of the preceding examples, wherein the processing circuitry is configured to determine the operating profile such that engine braking is prioritized over braking with the service brake.

Example 10. A vehicle (100) comprising the computer system of any of examples 1-9.

Example 11. A computer-implemented method for controlling operation of a vehicle (100), comprising:
- saving (S1), by processing circuitry (702) of a computer system (700), a data set associated with a path segment (2) during travel of a data collecting vehicle (100) along the path segment (2) in a first direction of travel (D), the path segment (2) comprising a plurality of target locations (3a,..., 3k), wherein the data set comprises several subsets of data points, each subset of data points relating to a location and a heading of the data collecting vehicle (100) at a respective one of the target locations (3a,..., 3k),
- determining (S2), by the processing circuitry (702), an operating profile to be used for controlling operation of a target vehicle (100') during subsequent travel of the target vehicle (100') along the path segment (2) in the first direction of travel (D), the target vehicle (100') comprising a service brake (101) cooled by a brake cooling fluid, the operating profile being determined such that a temperature of the brake cooling fluid will meet a predefined temperature criterion when the operating profile is active during travel along the path segment (2),
- during subsequent travel of the target vehicle (100'), activating (S4), by the processing circuitry, the operating profile in response to detecting (S3) that a predetermined set of activation criteria is fulfilled, wherein the set of activation criteria comprises a first criterion relating to a weight of the target vehicle (100'), a second criterion relating to a location of the target vehicle (100'), and a third criterion relating to a heading of the target vehicle (100').

Example 12. The method of example 11, wherein the first criterion is considered fulfilled when the weight of the target vehicle (100') is above a threshold weight, the second criterion is considered fulfilled when the target vehicle (100') is within a predetermined range from a starting target location (3a) of the path segment (2), and the third criterion is considered fulfilled when the heading of the target vehicle (100') is within a predetermined angular range from the first direction of travel (D).

Example 13. The method of example 11 or 12, wherein the set of activation criteria is considered fulfilled at least when the target vehicle (100') is fully loaded with goods and enters the path segment (2) via a first target location (3a) of the path segment (2) in the first direction of travel (D).

Example 14. The method of any one of examples 11-13, wherein saving the data set associated with the path segment comprises:
- temporarily storing subsets of data points during travel of the data collecting vehicle along a travelling path (1),
- in response to detecting that a predetermined first condition is fulfilled, initiate creation of the data set associated with the path segment, at least a portion of the temporarily stored subsets of data points being saved within the data set.

Example 15. The method of example 14, wherein the first condition is only considered fulfilled when a braking power of the data collecting vehicle is above a first threshold braking power, and/or when a temperature of a brake cooling fluid of the data collecting vehicle is above a threshold temperature.

Example 16. The method of example 14 or 15, wherein saving the data set associated with the path segment further comprises:
- in response to detecting that a predetermined second condition is fulfilled, adding a subset of data points to the saved path segment, the added subset of data points being associated with a current location and heading of the data collecting vehicle.

Example 17. The method of example 16, wherein the second condition is only considered fulfilled when a predetermined time and/or distance has/have elapsed since saving a previous subset of data points, and when a braking power of the data collecting vehicle is above a second threshold braking power.

Example 18. The method of any one of examples 11-17, wherein the determination of the operating profile is performed such that the temperature of the brake cooling fluid within the target vehicle is reduced, such as to a target temperature, during travel along an initial portion of the path segment in the first direction of travel.

Example 19. The method of any one of examples 11-18, wherein the determination of the operating profile is performed such that engine braking is prioritized over braking with the service brake.

Example 20. A computer program product comprising program code for performing, when executed by the processing circuitry, the method of any of examples 11-19.

Example 21. A non-transitory computer-readable storage medium comprising instructions, which when executed by the processing circuitry, cause the processing circuitry to perform the method of any of examples 11-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) configured to control operation of a vehicle (100), the computer system comprising processing circuitry (702) configured to:
- save a data set associated with a path segment (2) during travel of a data collecting vehicle (100) along the path segment in a first direction of travel (D), the path segment comprising a plurality of target locations (3a,..., 3k), wherein the data set comprises several subsets of data points, each subset of data points relating to a location and a heading of the data collecting vehicle (100) at a respective one of the target locations (3a,..., 3k),
- determine an operating profile to be used for controlling operation of a target vehicle (100') during subsequent travel of the target vehicle (100') along the path segment (2) in the first direction of travel (D), the target vehicle (100') comprising a service brake (101) cooled by a brake cooling fluid, the operating profile being determined such that a temperature of the brake cooling fluid will meet a predefined temperature criterion when the operating profile is active during travel along the path segment (2),
- during subsequent travel of the target vehicle, activate the operating profile in response to detecting that a predetermined set of activation criteria is fulfilled, wherein the set of activation criteria comprises a first criterion relating to a weight of the target vehicle (100'), a second criterion relating to a location of the target vehicle (100'), and a third criterion relating to a heading of the target vehicle (100').

2. The computer system of claim 1, wherein the first criterion is considered fulfilled when the weight of the target vehicle (100') is above a threshold weight, the second criterion is considered fulfilled when the target vehicle (100') is within a predetermined range from a starting target location (3a) of the path segment (2), and the third criterion is considered fulfilled when the heading of the target vehicle (100') is within a predetermined angular range (±α) from the first direction of travel (D).

3. The computer system of claim 1 or 2, wherein the set of activation criteria is considered fulfilled at least when the target vehicle (100') is fully loaded with goods and enters the path segment (2) via a first target location (3a) of the path segment (2) in the first direction of travel (D).

4. The computer system of any one of the preceding claims, wherein saving the data set associated with the path segment (2) comprises:
- temporarily storing subsets of data points during travel of the data collecting vehicle (100) along a travelling path (1),
- in response to detecting that a predetermined first condition is fulfilled, initiate creation of the data set associated with the path segment (2), at least a portion of the temporarily stored subsets of data points being saved within the data set.

5. The computer system of claim 4, wherein the first condition is only considered fulfilled when a braking power of the data collecting vehicle (100) is above a first threshold braking power, and/or when a temperature of a brake cooling fluid of the data collecting vehicle (100) is above a threshold temperature.

6. The computer system of claim 4 or 5, wherein saving the data set associated with the path segment (2) further comprises:
- in response to detecting that a predetermined second condition is fulfilled, adding a subset of data points to the saved path segment, the added subset of data points being associated with a current location and heading of the data collecting vehicle (100).

7. The computer system of claim 6, wherein the second condition is only considered fulfilled when a predetermined time and/or distance has/have elapsed since saving a previous subset of data points, and when a braking power of the data collecting vehicle (100) is above a second threshold braking power.

8. The computer system of any one of the preceding claims, wherein the processing circuitry is configured to determine the operating profile such that the temperature of the brake cooling fluid within the target vehicle (100') is reduced, such as to a target temperature, during travel along an initial portion of the path segment (2) in the first direction of travel (D).

9. The computer system of any one of the preceding claims, wherein the processing circuitry is configured to determine the operating profile such that engine braking is prioritized over braking with the service brake.

10. A vehicle (100) comprising the computer system of any of claims 1-9.

11. A computer-implemented method for controlling operation of a vehicle (100), comprising:
- saving (S1), by processing circuitry (702) of a computer system (700), a data set associated with a path segment (2) during travel of a data collecting vehicle (100) along the path segment (2) in a first direction of travel (D), the path segment (2) comprising a plurality of target locations (3a,..., 3k), wherein the data set comprises several subsets of data points, each subset of data points relating to a location and a heading of the data collecting vehicle (100) at a respective one of the target locations (3a,..., 3k),
- determining (S2), by the processing circuitry (702), an operating profile to be used for controlling operation of a target vehicle (100') during subsequent travel of the target vehicle (100') along the path segment (2) in the first direction of travel (D), the target vehicle (100') comprising a service brake (101) cooled by a brake cooling fluid, the operating profile being determined such that a temperature of the brake cooling fluid will meet a predefined temperature criterion when the operating profile is active during travel along the path segment (2),
- during subsequent travel of the target vehicle (100'), activating (S4), by the processing circuitry, the operating profile in response to detecting (S3) that a predetermined set of activation criteria is fulfilled, wherein the set of activation criteria comprises a first criterion relating to a weight of the target vehicle (100'), a second criterion relating to a location of the target vehicle (100'), and a third criterion relating to a heading of the target vehicle (100').

12. The method of claim 11, wherein the first criterion is considered fulfilled when the weight of the target vehicle (100') is above a threshold weight, the second criterion is considered fulfilled when the target vehicle (100') is within a predetermined range from a starting target location (3a) of the path segment (2), and the third criterion is considered fulfilled when the heading of the target vehicle (100') is within a predetermined angular range from the first direction of travel (D).

13. The method of claim 11 or 12, wherein the set of activation criteria is considered fulfilled at least when the target vehicle (100') is fully loaded with goods and enters the path segment (2) via a first target location (3a) of the path segment (2) in the first direction of travel (D).

14. A computer program product (714) comprising program code (720) for performing, when executed by the processing circuitry (702), the method of any of claims 11-13.

15. A non-transitory computer-readable storage medium comprising instructions, which when executed by the processing circuitry (702), cause the processing circuitry to perform the method of any of claims 11-13.
